# EUROPÄISCHE PATENTSCHRIFT

(11) **EP 0 289 713 B1**
(45) Veröffentlichungstag und Bekanntmachung des Hinweises auf die Patenterteilung: **12.05.1993**
(21) Anmeldenummer: 88102141.4
(22) Anmeldetag: 13.02.1988
(51) Int. Cl.: C08F 222/06, C08F 216/18

(54) **Verfahren zur Herstellung von Copolymerisaten mit hohem Polymerisationsgrad**
Process for preparing copolymers with high grade of polymerisation
Procédé de préparation de copolymères à degré de polymérisation élevé

(30) Priorität: 10.04.1987 DE 3712265
(43) Veröffentlichungstag der Anmeldung: 09.11.1988
(73) Patentinhaber: Giulini Chemie GmbH, D-67029 Ludwigshafen (DE)
(72) Erfinder: Pelah, Zvi, Savyon 56540 (IL); Potencsik, Istvan, Dr. Dipl.-Chem., D-6800 Mannheim (DE); Kopp, Werner, Dipl.-Chem., D-6721 Harthausen (DE); Urmann, Ernst, Dr. Dipl.-Chem., D-6700 Ludwigshafen/Rheingönheim (DE)

(56) Entgegenhaltungen:
- EP-A- 0 059 446
- EP-A- 0 068 847
- DE-A- 3 042 471

## Beschreibung

Die Erfindung betrifft ein Verfahren zur Herstellung eines pulverförmigen, hochmolekularen Copolymerisates aus Maleinsäureanhydrid und Methylvinylether. Das Copolymerisat ist nach dem neuen Verfahren praktisch frei von Monomeren und Lösungsmitteln und daher in besonderem Maße für den Einsatz im Lebensmittel-, Medizin- und Kosmetikbereich geeignet.

Es ist bekannt, daß man Copolymerisate aus Maleinsäureanhydrid und Alkylvinylethern durch Fällungspolymerisation herstellen kann. Dabei werden die Monomeren in organischen Lösungsmitteln, worin die entstehenden Polymerisate unlöslich sind, z.B. in aliphatischen oder aromatischen Kohlenwasserstoffen, umgesetzt.

In der US-PS 2,782,182 wird die Copolymerisation von Maleinsäureanhydrid und Methylvinylether in Benzol als Lösungsmittel durchgeführt. Dabei werden organische Peroxidverbindungen als Polymerisationsinitiatoren, die bis zu 0,125 Gew.-%, bezogen auf die Monomeren der Reaktionsmischung, betragen können, zugesetzt. Durch Zugabe einer kleinen Menge von Maleinsäureanhydrid-Methylvinylether-Copolymerisat soll die Menge an Polymerisationsinitiator reduziert werden können. Außerdem sollen dadurch die Reaktionsgeschwindigkeit und das Molekulargewicht erhöht werden.

Die Herstellung von hochmolekularen Copolymerisaten aus Maleinsäureanhydrid und Alkylvinylethern ist Gegenstand der britischen Patentschrift GB-PS 1,117,515. Das wesentliche Merkmal dieser Erfindung ist die Copolymerisation der oben genannten Monomeren in Methylenchlorid als Lösungsmittel. Dabei soll die Menge an Methylenchlorid etwa doppelt so groß sein wie die Menge an eingesetztem Maleinsäureanhydrid. Geeignete Copolymerisate sollen erhalten werden bei Maleinsäureanhydrid-Konzentrationen von 6 - 10 Gew.-%, bezogen auf den Gesamtansatz.

Ein Nachteil der bekannten Verfahren wird darin gesehen, daß bei der Anwendung höherer Maleinsäureanhydrid-Konzentrationen ein Verklumpen der Copolymeren stattfindet. Derartige Produkte sind schlecht handhabbar und daher in der Praxis unerwünscht. Die Beseitigung dieses Nachteils war auch bereits Aufgabe zahlreicher Patente, so der US-PS 3,532,771 und der DE-OS 2 014 242. In der US-PS 3,532,771 wird vorgeschlagen, die Copolymerisation in Gegenwart von sogenannten Antiklumpmitteln durchzuführen. Als Antiklumpmittel werden genannt: Copolymerisate des Maleinsäureanhydrids mit höheren (C₁₀ - C₁₆) Alkylvinylethern oder Homopolymerisate aus niederen Alkylvinylethern, z. B. Polymethylvinylether. Als Lösungsmittel wird in allen Fällen Benzol eingesetzt.

In der DE-PS 1 299 119 werden weiterhin als Antiklumpmittel Polystyrol, Copolymerisate des Styrols mit Methacrylsäure, Acrylsäure und Maleinsäureestern, Polymerisate von Acrylsäureestern, Vinylestern, Vinylethern, sowie lösliche Cellulosederivate vorgeschlagen.

Auch bei diesem Verfahren arbeitet man unter Anwendung von organischen Lösungsmitteln, insbesondere aromatischen Kohlenwasserstoffen, wie Benzol und Toluol. Dabei sollen feinteilige Polymerisatsuspensionen erhalten werden. Zur Isolierung der pulverförmigen Copolymerisate sind allerdings zusätzliche Verfahrensschritte erforderlich, insbesondere dann, wenn die vollständige Entfernung der aromatischen Kohlenwasserstoffe, wie Benzol und Toluol, aus dem Copolymerisat gewünscht wird.

In der DE-OS 3 108 100 wird schließlich noch die Polymerisation von Maleinsäureanhydrid mit Alkylvinylethern in einem Pulverbett beschrieben. Als Pulver eignen sich sowohl anorganische als auch organische Materialien. Die Polymerisation in einem bewegten Pulverbett soll sicherstellen, daß das Copolymerisat in Pulverform anfällt. Das entstehende Copolymerisat hat allerdings noch einen hohen Monomerenanteil, der in einer Nachpolymerisation umgesetzt werden muß.

Aufgabe dieser Erfindung ist es nun, ein Verfahren zur Herstellung von hochpolymeren Copolymerisaten des Maleinsäureanhydrids mit Methylvinylether zu finden, bei welchem sowohl ohne Verwendung von organischen Lösungsmitteln, als auch ohne Verwendung eines Pulverbettes und von anderen Hilfsstoffen gearbeitet werden kann und die geschilderten Nachteile nicht auftreten.

Die Aufgabe wird überraschenderweise dadurch gelöst, daß man die Copolymerisation des Maleinsäureanhydrids in einen Überschuß von Methylvinylether durchführt, wobei der Überschuß pro Mol Maleinsäureanhydrid 3 bis 20, vorzugsweise 6 bis 15 Mol Methylvinylether und die Polymerisationsinitiatorenmenge 0,001 bis 1 Gew.-%, vorzugsweise 0,01 - 0,5 Gew.-%, bezogen auf Maleinsäureanhydrid beträgt. Die Polymerisation wird zwischen 20 und 100°C, vorzugsweise jedoch zwischen 40 und 80°C durchgeführt.

Die Durchführung der Copolymerisation gemäß der vorliegenden Erfindung ist neu und war aus dem Stand der Technik nicht herleitbar. Das Verfahren ist nicht nur technisch leicht durchführbar, sondern führt darüber hinaus zu einem Reaktionsprodukt, das praktisch frei von Mononeren und Lösungsmitteln ist. Außerdem fällt es in der gewünschten Pulverform an,* Daß ein derartiges Ergebnis ohne Anwendung der zum Stand der Technik gehörenden Hilfsmittel, z.B. Antiklumpmittel, Vernetzer, Lösungsmittel, Pulverbett u.a. möglich ist, war überraschend und nicht vorhersehbar. In diesem Zusammenhang ist noch erwähnenswert, daß bei dem neuen Verfahren ausschließlich hochmolekulare Copolymerisate entstehen. Derartige Copolymerisate können besonders im medizinischen und kosmetischen Bereich sowie auf dem Lebensmittelgebiet eingesetzt werden, da sie praktisch frei von Monomeren und Lösungsmitteln sind.
* obwohl hier ohne Pulverbett gearbeitet wird.

Das Molekulargewicht des Copolymerisates wird durch die spezifische Viskosität definiert. Bestimmt wird die spezifische Viskosität derart, daß man 0,5 g Copolymerisat in 50 ml Methylethylketon löst und die spezifische Viskosität bei 25°C mißt.

Diese Bestimmung wird mit einem Cannon-Fenske-Routineviskosimeter, Kapillare Nr. 100, durchgeführt.

Als Polymerisationsinitiatoren kommen die unter den Polymerisationsbedingungen in Radikale zerfallenden Verbindungen in Frage. Solche Verbindungen sind z.B. organische Peroxide, wie Dibenzoylperoxid oder Dilauroylperoxid, Azoverbindungen, wie Azobisisobutyronitril, Peroxydicarbonate, wie Bis(4-t-butylcyclohexyl)peroxydicarbonat. Man verwendet die Initiatoren in Mengen von etwa 0,001 - 1 Gew.-%, vorzugsweise 0,01 bis 0,5 Gew.-%, bezogen auf Maleinsäureanhydrid. Es können auch Mischungen von verschiedenen Polymerisationsinitiatoren eingesetzt werden, die eine unterschiedliche Zerfallstemperatur aufweisen.

Die Polymerisationstemperatur kann in einem weiten Bereich schwanken. Sie liegt zwischen 20 und 100°C, vorzugsweise zwischen 40 und 80°C. Die maximal mögliche Reaktionstemperatur ist durch den Erweichungspunkt des Copolymerisats gegeben. Mit Vorteil arbeitet man bei dem Druck, der sich bei der jeweiligen Temperatur aus dem Dampfdruck des Methylvinylethers ergibt. Durch zusätzlich vorhandenes Inertgas kann der Gesamtdruck im Reaktor aber erhöht werden. Höhere Drucke als 50 bar wird man in der Praxis nicht anwenden. Die Polymerisation kann in einem Zeitraum von 1 - 20 Stunden durchgeführt werden. Zeiten von 3 - 8 Stunden haben zu besonders guten Ergebnissen geführt.

Als Polymerisationsreaktor können Kessel, Rührautoklaven, horizontale Mischer, die z.B. über einen Doppelmantel beheizbar bzw. kühlbar sind, und andere Reaktoren eingesetzt werden.

In einfachster Weise wird das erfindungsgemäße Verfahren derart durchgeführt, daß man das Maleinsäureanhydrid und den Polymerisationsinitiator in Methylvinylether löst bzw. dispergiert und in das Reaktionsgefäß bringt. Unter intensivem Durchmischen der Flüssigkeit wird die Temperatur bis an den Zerfallsbereich des Polymerisationsinitiators angehoben und das Anspringen der Reaktion abgewartet. Durch Kühlung wird die Reaktionswärme abgeführt und eine bestimmte Temperatur im Reaktionsraum aufrechterhalten. Nach Umsetzung des gesamten Maleinsäureanhydrids wird der überschüssige Methylvinylether verdampft. Als Rückstand verbleibt ein feinpulveriges Copolymerisat, das praktisch frei von Monomeren ist. Die Entfernung des Methylvinylethers aus der Polymerisatsuspension kann selbstverständlich auch durch andere Verfahren, wie z. B. Filtrieren erfolgen. Das trockene Methylvinylether-freie Produkt erhält man immer als pulverförmiges, nicht zum Verklumpen neigendes Copolymerisat.

Anhand der nachstehenden Beispiele wird der Erfindungsgegenstand noch näher erläutert.

### Beispiel 1

Als Polymerisationsreaktor diente ein auf 200 bar ausgelegter Stahlautoklav mit 750 ml Fassungsvermögen, der mit einem über eine Magnetkupplung angetriebenen Teflonrührer und mit einem absteigenden Kühler ausgestattet war. In den Autoklaven mündet ein Vakuumanschluß und eine Stickstoffleitung, um die Reaktion unter Luftausschluß durchführen zu können. Die Beheizung des Polymerisationsgefäßes erfolgte über ein Wasserbad. Es wurden 30 g Maleinsäureanhydrid und 0,03 g Dilauroylperoxid vorgelegt und der Autoklav geschlossen und evakuiert. Unter Kühlung wurden 350 ml Methylvinylether einkondensiert und nach Verschließen unter Rühren auf 60°C im Wasserbad innerhalb einer halben Stunde erwärmt. Nach einer Stunde wurde die Temperatur auf 65°C und nach einer weiteren Stunde auf 70°C erhöht und für drei Stunden konstant gehalten. Danach wurde der Methylvinylether abdestilliert und nach Öffnen des Autoklaven 48 g (99,4 % der Theorie) eines feinpulvrigen, farblosen Produktes mit einer spezifischen Viskosität von 3,55 erhalten.

### Beispiel 2

In der gleichen Apparatur wie in Beispiel 1 wurden folgende Komponenten eindosiert: 70g Maleinsäureanhydrid, 0,014 g Dibenzoylperoxid in 350 ml Methylvinylether. Die Reaktionstemperatur wurde innerhalb von 5 Stunden allmählich von 60°C auf 75°C gesteigert. Danach wurde der Methylvinylether abdestilliert und nach Öffnen des Autoklaven ein feinpulvriges, farbloses Produkt mit einer spezifischen Viskosität von 4,3 erhalten. Die Ausbeute entsprach, wie in Beispiel 1, dem theoretischen Wert einer 1 : 1 Copolymerisation.

### Beispiel 3

In die gleiche Apparatur wie in Beispiel 1 und 2 wurden folgende Mengen eindosiert: 30 g Maleinsäureanhydrid, 0,12 g Bis(4-t-butylcyclohexyl)peroxydicarbonat (BCHPC) in 350 ml Methylvinylether. Die Temperatur wurde innerhalb von 5 Stunden von 35°C auf 45°C gleichmäßig erhöht. Nach Abdestillieren des Methylvinylethers wurde ein feinpulvriges Produkt mit einer spezifischen Viskosität von 2,1 erhalten.

### Beispiel 4

In die gleiche Apparatur wie in Beispiel 1 wurden folgende Komponenten eindosiert: 30 g Maleinsäureanhydrid, 0,03 g Bis(4-t-butylcyclohexyl)peroxydicarbonat (BCHPC), 0,005 g Dilauroylperoxid in 350 ml Methylvinylether. Die Temperatur wurde innerhalb von 4 Stunden von 35°C auf 50°C gleichmäßig erhöht. Nach Abdestillieren des Methylvinylethers wurde ein feinpulvriges Produkt mit einer spezifischen Viskosität von 2,1 erhalten.

### Beispiel 5

In einem 26 l-Stahlautoklaven mit Wendelrührer und beheizbarem Doppelmantel wurden 3 kg Maleinsäureanhydrid und 4 g Dilauroylperoxid vorgelegt und der Reaktor geschlossen und evakuiert.

Nun wurden 15 l Methylvinylether zugegeben und gelinde erwärmt, bis alles Maleinsäureanhydrid gelöst war. Die Temperatur wurde auf ca. 50°C angehoben und nach Beginn der Reaktion durch geeignete Kühlung im Reaktionsgefäß eine Temperatur von 55 - 65°C aufrechterhalten. Nach 4 - 5 Stunden war die Reaktion beendet, was dadurch erkannt werden kann, daß kein monomeres Maleinsäureanhydrid mit Triphenylphosphanpapier nachgewiesen werden konnte. Der überschüssige Methylvinylether wurde abdestilliert. Man erhielt 4,8 kg eines farblosen, feinpulvrigen 1 : 1 Maleinsäureanhydrid-Methylvinylether-Copolymerisates mit einer spezifischen Viskosität von 3,1.

## Patentansprüche

1. Verfahren zur Herstellung von pulverförmigen Copolymerisaten des Maleinsäureanhydrids mit Methylvinylether im Molverhältnis 1 : 1 und einer spezifischen Viskosität im Bereich von 2 bis 5 durch Copolymerisation von Maleinsäureanhydrid mit Methylvinylether unter Druck und in Gegenwart von radikalisch zerfallenden Polymerisationsinitiatoren, dadurch gekennzeichnet, daß man die Copolymerisation des Maleinsäureanhydrids in einem Überschuß von Methylvinylether durchführt, wobei der Überschuß pro Mol Maleinsäureanhydrid 3 bis 20, vorzugsweise 6 - 15 Mol Methylvinylether und die radikalische Polymerisationsinitiatormenge 0,001 bis 1 Gew.-%, vorzugsweise 0,01 - 0,5 Gew.-% bezogen auf Maleinsäureanhydrid beträgt und die Copolymerisation ohne Lösungsmittel und Pulverbett durchgeführt wird.

2. Verfahren nach Anspruch 1, dadurch gekennzeichnet, daß man die Temperatur während der Polymerisation zwischen 20°C und 100°C, vorzugsweise zwischen 40°C und 80°C, einstellt.

3. Verfahren nach den Ansprüchen 1 und 2, dadurch gekennzeichnet, daß der Druck während der Polymerisation dem bei der entsprechenden Temperatur sich einstellenden Dampfdruck entspricht.

4. Verfahren nach den Ansprüchen 1 und 2, dadurch gekennzeichnet, daß die Polymerisation unter Inertgas durchgeführt wird und der Druck dabei insgesamt max. 50 bar beträgt.

5. Verfahren nach den Ansprüchen 1 bis 4, dadurch gekennzeichnet, daß man die Polymerisation in einem Zeitraum von 1 bis 20 Stunden, vorzugsweise 3 bis 8 Stunden, durchführt.

## Claims

1. Process for preparing powdered copolymers of maleic acid anhydride with methylvinylether in a molar ratio of 1:1 and having a specific viscosity in the range from 2 to 5 by copolymerising maleic acid anhydride with methylvinylether under pressure and in the presence of radically decomposing polymerisation initiators, characterised in that the copolymerisation of the maleic acid anhydride is carried out in an excess of methylvinylether, the excess per mole of maleic acid anhydride being 3 to 20, preferably 6 to 15 mole of methylvinylether and the quantity of radical polymerisation initiator being 0.001 to 1 wt. %, preferably 0.01-0.5 wt. %, based on maleic acid anhydride, the copolymerisation being carried out with a solvent and bed of powder.

2. Process according to claim 1, characterised in that the temperature is adjusted during polymerisation to between 20°C and 100°C, preferably between 40°C and 80°C.

3. Process according to claims 1 and 2, characterised in that the pressure during polymerisation corresponds to the vapour pressure which is produced at the temperature in question.

4. Process according to claims 1 and 2, characterised in that the polymerisation is carried out under an inert gas and the overall pressure is not more than 50 bar.

5. Process according to claims 1 to 4, characterised in that the polymerisation is carried out within a period of from 1 to 20 hours, preferably 3 to 8 hours.

## Revendications

1. Procédé de préparation de copolymères pulvérulents d'anhydride maléique et de méthylvinyléther en rapport molaire de 1:1 et avec une viscosité spécifique de l'ordre de 2 à 5 par copolymérisation d'anhydride maléique avec du méthylvinyléther sous pression et en présence d'initiateurs de polymérisation radicalaire, caractérisé en ce qu'on effectue la copolymérisation de l'anhydride maléique dans un excès de méthylvinyléther, l'excédent par mole d'anhydride maléique, étant de 3 à 20, de préférence de 6 à 15 moles de méthylvinyléther et la quantité d'initiateur de polymérisation radicalaire étant de 0,001 à 1% en poids, de préférence de 0,01 à 0,5% en poids par rapport à l'anhydride maléique et la copolymérisation étant effectuée sans solvant ni lit pulvérulent.

2. Procédé selon la revendication 1, caractérisé en ce qu'on établit la température entre 20 et 100°C, de préférence entre 40 et 80°C durant la polymérisation.

3. Procédé selon les revendications 1 et 2, caractérisé en ce que la pression établie au cours de la polymérisation correspond à la pression de vapeur qui s'établit à la température correspondante.

4. Procédé selon les revendications 1 et 2, caractérisé en ce que la polymérisation est effectuée sous gaz inerte et que la pression s'élève dans ce cas dans l'ensemble à 50 bar au maximum.

5. Procédé selon les revendications 1 à 4, caractérisé en ce qu'on effectue la polymérisation dans un intervalle de temps de 1 à 20 heures, de préférence de 3 à 8 heures.
